# EUROPÄISCHE PATENTSCHRIFT

(11) **EP 1 362 807 B1**
(45) Veröffentlichungstag und Bekanntmachung des Hinweises auf die Patenterteilung: **26.08.2009**
(21) Anmeldenummer: 03008975.9
(22) Anmeldetag: 17.04.2003
(51) Int. Cl.: B65G 19/28

(54) **Rinnenschuss für Kettenkratzförderer**
Channel section for scraper-chain conveyor
Section de canal pour transporteur à raclettes

(30) Priorität: 17.05.2002 DE 10222598
(43) Veröffentlichungstag der Anmeldung: 19.11.2003
(73) Patentinhaber: Bucyrus DBT Europe GmbH, 44534 Lünen (DE)
(72) Erfinder: Vorsteher, Dirk, Dr., 33619 Bielefeld (DE); Merten, Gerhard, 44534 Lünen (DE); Fischer, Frank, 44534 Lünen (DE); Wirtz, Jörg, 45529 Hattingen (DE); Schmidt, Siegfried, 46242 Bottrop (DE); Broszat, Martin, 59349 Nordkirchen (DE); Hefferan, Alfred, Venetia, PA 15367-1055 (US); Cobley, John, Farnsfield, Nottinghamshire NG228EZ (GB); McAndrew, Alister, Belper, Derby DE56IJE (GB); Losbrodt, Olaf, 44623 Herne (DE)
(74) Vertreter: Althaus, Arndt

(56) Entgegenhaltungen:
- EP-A1- 0 785 153
- DE-A1- 3 933 884
- FR-A1- 2 128 381
- GB-A- 2 095 195

## Beschreibung

Die Erfindung betrifft einen Rinnenschuß für untertägige Streb- und Streckenförderer gemäß dem Oberbegriff des Anspruchs 1. Ein solche Rinnenschuß ist aus DE 3 905 324 A1 bekannt.

In untertägigen Gewinnungsanlagen wie z.B. untertägigen Bergbaubetrieben kommen Kettenkratzförderer großer Gesamtlängen zum Einsatz, die aus einzelnen endseitig zugfest miteinander verbundenen Rinnenschüssen zusammengesetzt sind. Die Verbindung der benachbarten und aneinander angeschlossenen Rinnenschüsse erfolgt z.B. über Knebeltaschen und Knebel, die eine gewisse Winkelbeweglichkeit in der Horizontalen und der Vertikalen der benachbarten Rinnenschüsse zulassen, so daß der Kettenkratzförderer Bodenunebenheiten im Liegenden ausgleichen kann und mit dem Fortschritt der Abbaufront mitbewegt werden kann. Sofern die Rinnenschüsse für Strebförderer eingesetzt werden, sind sie versatzseitig und/oder abbaustoßseitig mit Anbauteilen zur Führung z.B. eines Gewinnungshobels oder eines Walzenladers versehen und weisen Anschlußkonsolen für einen am Strebausbau widergelagerten Schreitbalken auf. Durch Verbesserungen der Gewinnungsleistung der Gewinnungsmaschinen und durch Steigerung der Streblängen auf mittlerweile bis zu 450m steigt die von den Förderern zu bewältigende Förderleistung ebenfalls an und moderne Streb- und Streckenförderer müssen Förderkapazitäten von wenigstens 2000 t/h (Tonnen/Stunde), bei Hochleistungsförderern auch von 5000 t/h bewältigen können. Mit steigender Förderkapazität nimmt der Verschleiß einzelner Rinnenschüsse zwangsläufig zu und es besteht im Markt ein Bedarf an Förderrinnen mit hoher Förderkapazität und langer Lebensdauer bei möglichst niedrigen Produktionskosten und niedrigem Gesamtgewicht der einzelnen Rinnenschüsse.

Moderne untertägige Streb- und Streckenförderer können anhand des Aufbaus der Rinnenschüsse in drei Gruppen eingeteilt werden. Die erste Gruppe beinhaltet Förderer mit vollständig gegossenen Rinnenschüssen. Der Vorteil derartiger Gußkonstruktionen liegt in ihrer hohen Reproduzierbarkeit, der hohen Belastbarkeit aufgrund des homogenen Aufbaus und der geringen Anfälligkeit gegenüber Montagefehlern. Nachteilig sind die hohen Materialkosten, die geringe Eignung, einzelne Zonen für höhere Belastungen oder längere Lebensdauer auszulegen sowie die fehlende Möglichkeit, Verschleißteile auszutauschen.

Die zweite Gruppe von Rinnenschüssen besteht vollständig oder annähernd vollständig aus einer Schweißkonstruktion, wobei zumindest die höher belasteten Bauteile wie Förderboden und/oder Seitenprofile aus Walzprofilen bestehen und hierdurch eine deutlich längere Lebensdauer und geringere Verschleißanfälligkeit aufweisen (DE 29 18 007 A1, DE-PS 974 612, DE 393 38 84 C2 oder DE 400 61 83 C2). Der wesentliche Vorteil der geschweißten Rinnenschüsse liegt darin, daß durch die Auswahl unterschiedlicher Materialien und Herstellverfahren für die jeweiligen Teile der Schweißkonstruktion eine lange Lebensdauer der Rinnenschüsse erzielt werden kann. Fehler innerhalb der Maßhaltigkeit einzelner Teile der Schweißkonstruktion können beim Montagevorgang, d.h. beim Fügen der Schweißverbindungen, ausgeglichen werden. Als wesentliche Nachteile gelten bisher die hohen Fertigungskosten, die u.a. auf die Vielzahl der mit großem Personalaufwand vorzunehmenden Montageschritte und Schweißverbindungen zurückzuführen ist, die Gefahr von Fehlern oder Rissbildungen in den Schweißverbindungen und die hohen Werkzeugkosten für die zum Walzen der Profilteile benötigten Werkzeuge. Die Rinnenschüsse der zweiten Gruppe können sich gleichwohl im Markt behaupten, da durch einen Austausch abgenutzter Teile zu vergleichsweise günstigen Kosten die volle Funktionsfähigkeit des Förderers wieder hergestellt werden kann. Bei den Förderrinnen der zweiten Gruppe kommt als auszutauschendes Bauteil insbesondere auch der Obertrum in Betracht, der als Wechseltrog bzw. Schleißtrog ausgebildet werden kann.

Die dritte Gruppe bilden sogenannte Hybridrinnen, die einerseits aus Gußteilen und andererseits aus Walzteilen bestehen. Eine derartige Hybridrinne zeigt beispielsweise die EP 525 926 B1. Hybridrinnen kommen mit einer geringen Anzahl von Schweißnähten aus, da z.B. die gesamte Konstruktion der Seitenwange, ggf. einschließlich Seitenprofil zur Führung der Kratzer in den Trumen und Knebeltasche als Teil der Rinnenschußverbindungsmittel, einstückig ausgebildet werden kann, während der Förderboden als eines der am stärksten belasteten Teile an den gegossenen Seitenwangen angeschweißt wird. Ferner ist bei Hybridrinnen bekannt, die Rinnenschußverbindungsmittel und andere Anbauteile zum Rücken des Förderers oder zur Führung einer Gewinnungsmaschine zwischen nach außen rückspringenden Flanschen der Seitenwange anzuordnen und nachträglich dort anzuschweißen (DE 39 05 324 A1).

Aufgabe der Erfindung ist es, einen Rinnenschuß zu schaffen, der aufgrund seiner konstruktiven Gestaltung kostengünstig, mit geringem Gesamtgewicht und mit weniger Montageschritten als ein gattungsgemäßer Rinnenschuß herstellbar ist und der eine lange Lebensdauer aufweist.

Diese Aufgabe wird mit der in Anspruch 1 angegebenen Erfindung gelöst. Vorteilhafte Ausgestaltungen sind in den Unteransprüchen angegeben.

Bei dem erfindungsgemäßen Rinnenschuß weisen die die Seitenwangen bildenden Gußteile an der Innenwand des Zwischenflansches, im wesentlichen auf halber Höhe zwischen Flanschschenkel und Flanschansatz, wenigstens eine Stufe zur Abstützung und Anschweißung des ein Zwischenblech bildenden Bleches auf, unterhalb der der Zwischenschenkel und der Fußflansch eine Profilverstärkung bilden, und oberhalb der der Zwischenschenkel einen Aufnahmeraum zur Aufnahme eines gewalzte, mit einem Förderboden verschweißte Seitenprofile aufweisenden Obertrums seitlich begrenzt. Erfindungsgemäß werden die Seitenwangen aus Gußteilen gebildet, so daß sie kostengünstiger als z.B. Spezialwalzprofile herstellbar sind. Die Profilform der Seitenwangen mit Flanschschenkel und Flanschansatz an der Außenwand sowie Stufe an der Innenwand ermöglicht, daß Funktions- und Anbauteile wenigstens teilweise formschlüssig angesetzt und aufgenommen werden können. Dies vereinfacht die erforderlichen Montageschritte und erleichtert das Anbringen der Schweißnähte. Die höher belasteten Teile im Obertrum können aus Walzteilen bestehen und mithin eine längere Lebensdauer haben. Die Verbindung der Seitenwangen erfolgt etwa mittig zwischen Untertrum und Obertrum, jedoch mittels eines zusätzlichen, nicht den Förderboden bildenden Zwischenblechs und dieser Bereich ist durch die Profilverstärkung in den Gußteilen verstärkt. Der weniger belastete Untertrum bzw. seine seitlichen Begrenzungen sind unmittelbar in die gegossenen Seitenwangen integriert. Der Rinnenschuß besteht aus wenigen Teilen und ist mittels automatisiert durchführbarer Montage- und Schweißschritte zusammenfügbar.

Der Zwischenschenkel kann an der Innenwand eine zweite Stufe zur Abstützung des Förderbodens aufweisen, die oberhalb der zur Abstützung des Zwischenblechs dienenden ersten Stufe ausgebildet ist. Durch diese Maßnahme werden der Förderboden und sämtliche Kräfte in Vertikalrichtung nicht mittels des Zwischenblechs, sondern mittels der Stufen innerhalb der gegossenen Seitenwangen abgestützt. Der Zwischenschenkel hat einen Schenkelabschnitt oberhalb der Stufe/n und einen Schenkelabschnitt unterhalb der Stufe/n, wobei die Wandstärke des oberen Schenkelabschnitts mehr als 30%, vorzugsweise mehr als 50 % kleiner sein kann als die Wandstärke des unteren Schenkelabschnitts im Bereich der Profilverstärkung, um das Gesamtgewicht des Rinnenschusses niedrig zu halten und die Konstruktion der Gußteile an die erwarteten Belastungen anzupassen.

Bei der insbesondere bevorzugten Ausführungsform wird der Obertrum von einem Wechseltrog gebildet, dessen Seitenprofile und/oder Förderboden in ihrer Wandstärke vorzugsweise mit einer Verschleiß- oder Abnutzungsschicht versehen sind und aus Walzprofilen oder Walzteilen bestehen. Die Seitenprofile sind vorzugsweise im wesentlichen L-förmig oder T-förmig und weisen eine an die Profilform der Kratzer angepaßte Innenseite auf. Bei einer Ausführungsalternative des Wechseltroges kann der Förderboden seitlich über die Vertikalschenkel der Seitenprofile des Wechseltrogs bzw. dessen Innenseiten hinausragen und sich im Montagezustand unmittelbar an der zweiten Stufe abstützen. Alternativ kann der Förderboden zwischen den Vertikalschenkeln der Seitenprofile des Wechseltrogs eingeschweißt sein, und der Wechseltrog stützt sich dann vorzugsweise mit dem Fuß des Vertikalschenkels der Seitenprofile unmittelbar auf dem Zwischenblech ab. Für die Montage des Wechseltroges ist besonders vorteilhaft, wenn an der Innenwand des oberen Schenkelabschnitts auf Höhe des Flanschansatzes eine angegossene Nase ausgebildet ist, die im Montagezustand die einzige Anlagefläche und seitliche Fixierung für den Wechseltrog bildet.

Besonders vorteilhaft ist, wenn der Flanschschenkel den Flanschansatz nach außen überragt und den Auflagefuß auf dem Liegenden bildet und/oder wenn der untere Zwischenschenkel an der Außenwand unterhalb der Stufe/n mit einer Schräge von vorzugsweise etwa 60° versehen ist und die Schräge, der untere Schenkelabschnitt und die Deckwand des Flaschschenkels eine Einbuchtung zur formschlüssigen Abstützung und Aufnahme entsprechender Ausbuchtungen an den Rinnenschußverbindungsmitteln und/oder an einer Anschlußkonsole für den Schreitbalken bilden und begrenzen. Die formschlüssige Aufnahme und Einpassung der Rinnenschußverbindungsmittel und Anschlußkonsolen hat nicht nur fertigungstechnisch Vorteile, sondern nach deren Montieren und Einschweißen werden die von Gußteilen gebildeten Seitenwangen zwischen dem Flanschansatz und dem Flanschschenkel sowie unterhalb der Stufe/n zusätzlich abgestützt und versteift, so daß die Seitenwangen ggf. auch höchste, von einer am Rinnenschuß geführten Gewinnungsmaschine ausgeübte Kräfte und Belastungen aufnehmen können.

Zur Reduzierung des Gesamtgewichtes des Rinnenschusses können gewichtsreduzierende, vorzugsweise mit angegossenen Stegrippen ausgesteifte Einziehungen in der Außenwand des unteren Schenkelabschnitt, der Unterseite des Flanschschenkels und/oder der Bodenwand des Fußflansches sowie an anderen geeigneten Stellen vorgesehen sein. Bei einer möglichen Ausführungsform des Rinnenschuß für einen Strebförderer kann dieser voneinander abweichend ausgebildete Seitenwangen haben, wobei an der einen, beim Strebförderer versatzseitigen Seitenwange eine Anschlußkonsole für einen Schreitbalken angegossen ist und/oder an der anderen, beim Strebförderer abbaustoßseitigen Seitenwange wenigstens zwei Stützrippe angegossen sind. An der versatzseitigen Seitenwange können dann auch vertikal sich erstreckende Stützstege zum Unterstützen einer versatzseitigen Maschinenfahrbahn, eines Winkelblechs od.dgl. angegossen sein. Auch hier ist günstig, wenn die angegossenen oder angeschweißten Anschlußkonsolen und/oder die angegossenen Stützrippen den Flanschansatz gegenüber dem Flanschschenkel seitlich des und parallel zum Zwischenflansch versteifen. Die beiden Seitenwangen können auch identisch zueinander ausgebildet und spiegelverkehrt zueinander über das Zwischenblech miteinander verschweißt sein.

Bei einer Ausführungsform der aus Gußteilen bestehenden Seitenwangen kann unter dem Fußflansch eine Längsausnehmung angegossen sein, an der das Bodenblech, den Fußflansch untergreifend, angeschweißt wird. Alternativ kann der Fußflansch jeweils eine senkrechte, annähernd bis zum Liegenden heranreichende Stirnfläche aufweisen, wobei zwischen den Stirnflächen der Fußflansche beider Seitenwangen das Bodenblech angeschweißt ist. Hierbei ist jeweils von Vorteil, wenn der untere Schenkelabschnitt des Zwischenschenkels an der Innenwand, ausgehend von der Profilverstärkung, über eine bogenförmige Profilkontur in den Fußflansch übergeht, um unmittelbar die seitliche Begrenzung für den Untertrum zu bilden.

In der bevorzugten Ausgestaltung des erfindungsgemäßen Rinnenschusses bilden zwei parallel nebeneinander angeordnete und eine Öffnung zwischen sich freilassende Blechstreifen das Zwischenblech, welche in der ggf. unteren Stufe am Zwischenschenkel angeschweißt werden. Die Öffnung zwischen den beiden Blechstreifen reduziert das Gesamtgewicht des Rinnenschusses und ermöglicht gleichzeitig, daß nach Demontage eines Wechseltroges oder eines als Inspektionstrog ausgeführten Wechseltroges eine Inspektionsöffnung für den Untertrum vorhanden ist. Bei der Ausführungsform mit Wechseltrog mit im wesentlichen T-förmigen Seitenprofilen umfassen diese einen Horizontalsteg, der mit dem Flanschansatz der Seitenwange über vorzugsweise eine einzige durchgehende Längsschweißnaht als Arretiermittel für den Wechseltrog verschweißt werden kann. Bei einer Ausführung des Wechseltrogs mit L-förmigen Seitenprofilen mit Vertikalschenkel und Horizontalschenkel kann im Montagezustand der Wechseltrog über vorzugsweise eine einzige durchgehende Längsschweißnaht als Arretiermittel für den Wechseltrog am Spalt zwischen Seitenprofil und Seitenwange verschweißt sein, wobei weiter vorzugsweise die Horizontalschenkel jeweils bündig mit den zugehörigen Flanschansätzen der Seitenwangen abschließen können, um z.B. eine großflächige Maschinenfahrbahn zu erhalten. Durch das feste Verschweißen des Wechseltroges mit der Seitenwange werden sämtliche Nachteile, wie sie bei lösbaren Befestigungsmittel für Wechseltröge existieren, vermieden. Zur Demontage des Wechseltroges kann dann die Längsschweißnaht maschinell aufgetrennt, beispielsweise ausgefräst werden. Durch den über die Rinnenschußlänge konstanten Aufbau sowohl der Seitenwangen als auch der Seitenprofile der Wechseltröge ist nicht nur eine automatisierte, maschinelle Schweißung und Fertigung einzelner Rinnenschüsse möglich, sondern auch das Auftrennen der Schweißnähte zum Austauschen eines Wechseltroges kann maschinell erfolgen.

Die das Zwischenblech bildenden Blechstreifen und/oder der Förderboden können endseitig mit durch Brennschneiden hergestellten, bogenförmigen Rändern versehen sein, wobei das Wölbungsprofil des einen Randes komplementär zum Wölbungsprofil des anderen Randes ausgebildet ist. In bevorzugter Ausführung eines Wechseltroges als Inspektionstrog besteht dieser aus drei identisch zueinander ausgeführten Trogabschnitten mit jeweils einem Förderbodenabschnitt und zwei im wesentlichen L-förmigen oder T-förmigen Seitenprofilabschnitten mit Vertikalschenkel und Horizontalschenkel, wobei vorzugsweise bei den beiden äußeren Trogabschnitten die Horizontalschenkel jeweils mit den Innenwänden der Seitenwangen bzw. der dort angeordneten Nasen oder die Außenstirnkanten eines nach außen vorspringenden Horizontalstegs des Horizontalschenkels mit der Oberseite der Flanschansätze über Längsschweißnähte verschweißt sind und der mittlere Trogabschnitt mittels lösbarer Trogbefestigungsmittel an den beiden anderen Trogabschnitten und/oder an den die Seitenwangen bildenden Gußteilen arretiert ist. Vorzugsweise sind die Förderbodenabschnitte aller Trogabschnitte trogendseitig mit z.B. durch Brennschneiden hergestellten gewölbten Rändern versehen, wobei das Wölbungsprofil des einen Randes komplementär zum Wölbungsprofil des anderen Randes ausgebildet ist.

Zweckmäßigerweise ragt einer der Blechstreifen am Rinnenschußende endseitig über beide Walzprofile hinaus und der andere Blechstreifen ist gegenüber dem Rinnenschußende zurückversetzt angeordnet. Mit diesen Maßnahmen entsteht eine Überlappung am Rinnenstoß, so daß Feingut aus dem Obertrum nicht in den Untertrum fallen kann. Für die Schweißkonstruktion des Rinnenschusses umfassen die Rinnenschußverbindungsmittel vorzugsweise geschmiedete und an den gegossenen Seitenwangen angeschweißte Knebeltaschen, in die Knebelköpfe von Knebelbolzen einlegbar sind. Das Anschweißen der Knebeltaschen an den Seitenwangen erfolgt vorzugsweise dergestalt, daß die Knebeltaschen an einem Rinnenschußende über die Seitenwangen hinausragend und am anderen Rinnenschußende zurückversetzt angeordnet sind, so daß durch die Überlappung der Knebeltaschen am Rinnenschußstoß zwischen zwei benachbarten Rinnenschüssen ein Ermüdungsverschleiß oder Ausbrüche an den Stirnenden der aus Gußteilen bestehenden Seitenwangen und/oder des Förderbodens vermieden werden. Alternativ können die als Rinnenschußverbindungsmittel dienenden Knebeltaschen oder Rückhalteteile für Knebelköpfe von Rinnenschußverbindungsknebeln integral an den aus Gußteilen bestehenden Seitenwangen angegossen sein. Weiter alternativ kann bei der abbaustoßseitigen Seitenwange eines Strebförderers der obere Flanschansatz ausschließlich im Bereich der angeschweißten oder angegossenen Knebeltaschen oder des angegossenen Rückhalteteils ausgebildet sein. Zumindest diese Seitenwange kann dann über an der Außenwand angegossene Rippen od.dgl. weiter versteift und verstärkt sein, wobei die Rippe mit einer Aussparung versehen sein kann, an der ein Hebemittel zum Heben des Rinnenschusses angreifen kann.

Weitere Vorteile und Ausgestaltungen des erfindungsgemäßen Rinnenschuß ergeben sich aus der nachfolgenden Beschreibung von mehreren, schematisch in der Zeichnung gezeigten Ausführungsbeispielen. In der Zeichnung zeigen:
- **Fig. 1**: perspektivisch einen erfindungsgemäßen Rinnenschuß gemäß einem ersten Ausführungsbeispiel;
- **Fig. 2**: einen Vertikalschnitt durch einen Rinnenschuß gemäß der Ausführungsform nach Fig. 1;
- **Fig. 3**: einen Vertikalschnitt durch einen Rinnenschuß gemäß einem zweiten Ausführungsbeispiel;
- **Fig. 4**: einen Vertikalschnitt durch einen Rinnenschuß gemäß einem dritten Ausführungsbeispiel;
- **Fig. 5**: perspektivisch einen aus drei identischen Trogabschnitten gebildeten Inspektionstrog; und
- **Fig. 6**: eine Draufsicht auf den Inspektionstrog.

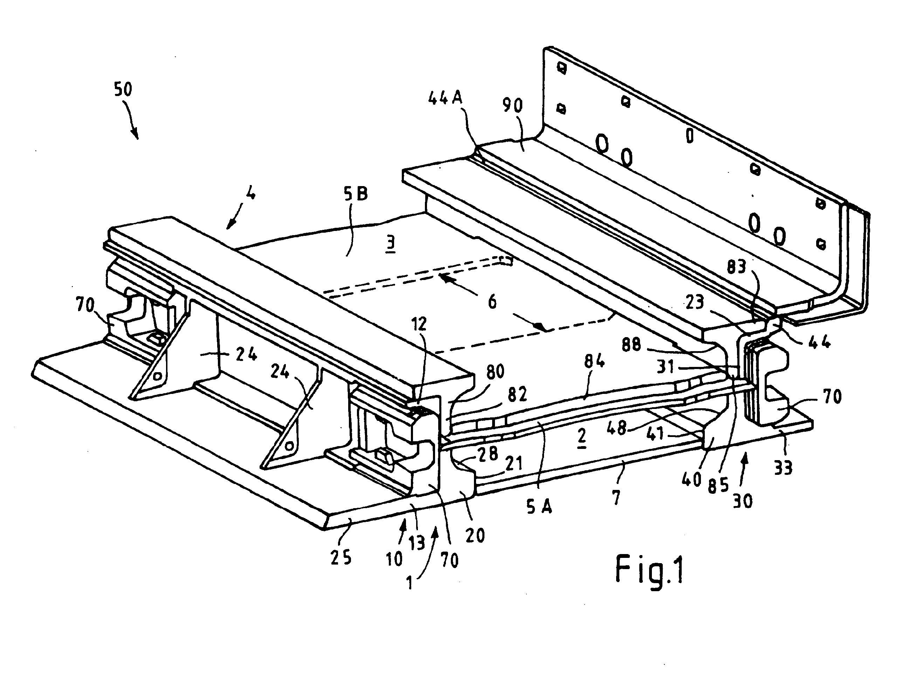

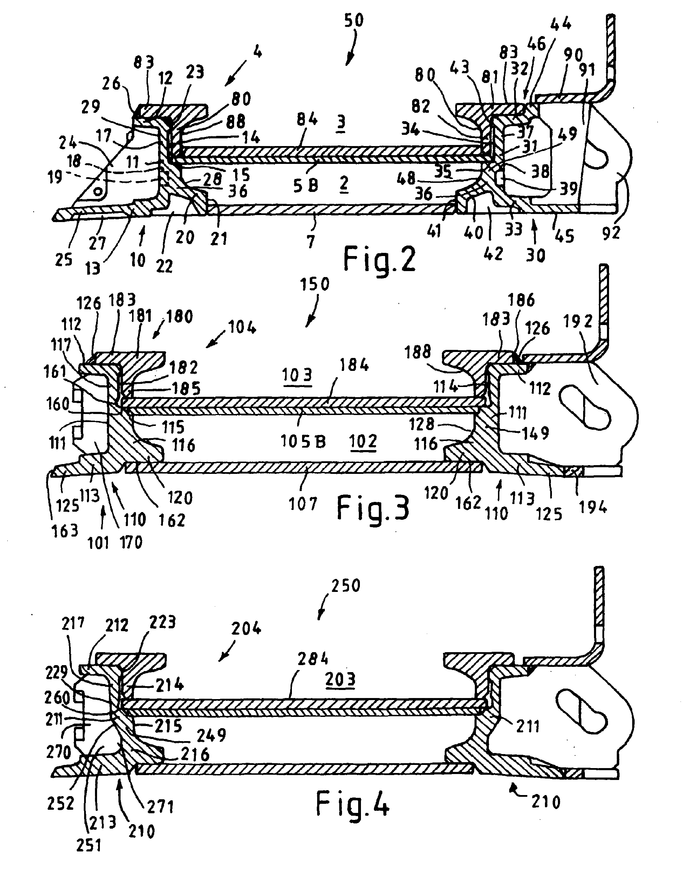

Der in den Fig. 1 und 2 insgesamt mit 50 bezeichnete Rinnenschuß gemäß einem ersten Ausführungsbeispiel ist in Ausführungsform für einen untertägigen Strebförderer dargestellt und umfaßt eine den Untertrum 2 unmittelbar begrenzende Rahmenkonstruktion 1 sowie einen den Obertrum 3 bildenden, auswechselbar ausgeführten und sich an der Rahmenkonstruktion 1 abstützenden Wechsel- oder Schleißtrog 4. Der in montiertem Zustand dargestellte Wechseltrog 4 ist von der Rahmenkonstruktion 1 vertikal abhebbar. Die Rahmenkonstruktion 1 des Rinnenschusses 50 hat als wesentliche Bauteile zwei unterschiedlich ausgebildete, in sich unsymmetrische und aus Gußteilen bestehende Seitenwangen 10, 30, von denen die Seitenwange 10 bei einem Strebförderer abbaustoßseitig und die Seitenwange 30 versatzseitig angeordnet ist. Beide Seitenwangen 10, 30 weisen jeweils einen Zwischenflansch 11, 31, einen oberen, nach außen weisenden und am Zwischenflansch 11, 31 angegossenen Flanschansatz 12, 32 sowie einen unteren, nach außen vorspringenden, angegossenen Flanschschenkel 13, 33 auf. Die hier unterschiedlich ausgebildeten Seitenwangen 10, 30 sind mit ihren Flanschansätzen 12, 32 bzw. Flanschschenkeln 13, 33 nach außen weisend über zwei etwa auf halber Höhe an der Innenwand 14, 44 des Zwischenflansches 11, 31 angeschweißte und in Fig. 1 schematisch gezeigte Blechstreifen 5A, 5B fest miteinander verbunden, wobei die Blechstreifen 5A, 5B voneinander beabstandet sind und innerhalb des Rinnenschusses 50 eine Öffnung 6 ausbilden, die bei abgenommenem Wechseltrog 4 als Inspektionsöffnung zur Revision oder Inspektion einer im Untertrum 2 umlaufenden und mit Kratzern bestückten, nicht dargestellte Kratzerkette dienen kann. Die ein Zwischenblech zur Versteifung der Rahmenkonstruktion 1 bildenden Blechstreifen 5A, 5B liegen auf einer Stufe 15, 35 auf, die auf halber Höhe an der Innenwand 14, 34 des Zwischenflansches 11, 31 der Seitenwangen 10, 30 angegossen ist. Unterhalb der Stufe 15, 35 bildet der Schenkelabschnitt 16 bzw. 36 durch eine erhöhte Wandstärke eine massive Profilverstärkung 49 der Seitenwange 10, 30, um die Blechstreifen 5A, 5B und den sich darauf abstützenden Wechseltrog 4 mit der notwendigen Sicherheit zu unterstützen. Der Schenkelabschnitt 17, 37 des Zwischenflansches 11, 31 ist entsprechend in der Wanddicke deutlich niedriger, insbesondere etwa 50% dünner ausgelegt als deren unterer Schenkelabschnitt 16 bzw. 36. Die oberen Schenkelabschnitte 17, 37 begrenzen seitlich den Aufnahmeraum für den Wechseltrog 4. Zur Reduzierung des Gesamtgewichts der aus Gußteilen bestehenden Seitenwangen 10, 30 können u.a. im unteren Schenkelabschnitt 16 bzw. 36 Einziehungen 18, 38 ausgebildet sein, die über Stegrippen 19,39 in Vertikalrichtung verstärkt und versteift sind.

An beiden unteren Schenkelabschnitten 16, 36 ist, nach innen vorspringend, jeweils ein Fußflansch 20, 40 angegossen, der jeweils in einer vertikal verlaufenden Stirnfläche 21, 41 endet, zwischen denen ein Bodenblech 7 als unterer Abschluß des Untertrums 2 angeschweißt ist. Die Unterseiten des Fußflansches 20, 40 beider Seitenwangen 10, 30 sind jeweils mit weiteren, gewichtsreduzierenden und mit Stegrippen verstärkten Einziehungen versehen, wie beispielhaft in der Ansicht nach Fig. 2 mit Bezugszeichen 22 bzw. 42 bezeichnet. Die nach innen bzw. schräg nach oben weisenden Innenseiten 28, 48 vom Fußflansch 20, 40 bzw. vom unteren Schenkelabschnitt 16, 36 der Seitenwangen 10, 30 sind mit einer an die Profilform der Kratzerenden versehenen Kontur ausgebildet, so daß sich die Kratzer im Untertrum 2 unmittelbar an den Innenseiten 28, 48 der unteren Profilschenkel 16, 36 bzw. Fußschenkel 20, 40 führen. Beide oberen Schenkelabschnitte 17, 37 des Zwischenflansches 11, 31 weisen, etwa auf Höhe des Flanschansatzes 12 bzw. 32, eine sich über die gesamte Rinnenschußlänge erstreckende, angegossene und schematisch angedeutete Nase 23, 43 auf, die die einzige seitliche Fixierung für die im Querschnitt im wesentlichen T-förmigen und aus Walzprofilen bestehenden Seitenprofile 80 des Wechseltrogs 4 bilden.

Die abbaustoßseitige Seitenwange 10 hat, abweichend von der versatzseitigen Seitenwange 30, zwei zwischen dem unteren Flanschschenkel 30 und dem oberen, vergleichsweise kurzen Flanschansatz 12 angegossene Stützrippen 24, die sich schräg nach unten und außen erweitern und von einem Flanschschenkelfortsatz 25 untergriffen sind, der um einiges über den Flanschansatz 12 nach außen vorspringt. Dessen Unterseite kann mit weiteren gewichtsreduzierenden und von Stegrippen ausgesteiften Einziehungen 26 versehen sein, ist leicht zum Bodenblech 7 bzw. zur Horizontalen nach unten abgewinkelt und liegt im Betrieb eines Strebförderers als Auflagefuß auf dem untertägigen Liegenden auf. Bei der Seitenwange 30 hingegen sind entsprechende Stützrippen nicht angegossen, sondern eine Winkelleiste 90, an der z.B. der Triebstock eines Walzenladers befestigt werden kann, ist mittels mehrerer an der Seitenwange 30 angegossener und vertikal aufragender Stützbleche 91 in Vertikalrichtung abgestützt. Der obere Flanschansatz 32 der Seitenwange 30 weist eine angegossene und dessen äußeres Ende bildende, kräftige und in der Höhe an die Dicke der Horizontalschenkel 81 der Seitenprofile 80 angepaßte Leiste 44 auf, die nach innen zusammen mit der Oberseite des Flanschansatzes 32 einen Stufenabsatz bildet, an dem sich der Horizontalschenkel 81 des versatzseitigen Seitenprofils 80 mit einem nach außen über den Vertikalschenkel 82 hinausragenden Horizontalsteg 83 abstützt. Die nach innen zum Obertrum 3 weisende Fläche der Leiste 44 ist mit einer Anphasung 44A versehen, um den Wechseltrog 4 und die Seitenwange 30 mit einer durchgehenden Längsschweißnaht, wie in Fig. 2 schematisch mit Bezugszeichen 46 angedeutet, als Arretiermittel für den Wechseltrog 4 zu verbinden. In ähnlicher Weise ist auch der Horizontalsteg 83 des abbaustoßseitigen Seitenprofils 80 über die Schweißnaht 26 mit der Oberseite des Schenkelansatzes 12 der Seitenwange 10 verbunden.

Der Flanschschenkelfortsatz 45 am Flanschschenkel 33 der versatzseitigen Seitenwangen 30 verläuft flacher als der Flanschschenkelfortsatz 25 der gegenüberliegenden Seitenwange 10, ist kürzer als diese und aufgrund ihrer geringeren Höhe ohne Einziehungen ausgebildet. Zwischen dem Flanschschenkel 33 und dem Flanschansatz 32 der Seitenwange 30 kann jedoch eine Anschlußkonsole 92 entweder angegossen oder angeschweißt sein, an der ein Schreitbalken zum Rücken eines Strebförderers angeschlagen werden kann.

Der Zwischenflansch 11, 31 bildet jeweils zusammen mit den Flanschschenkeln 13, 33 bzw. Flanschansätzen 12, 32 an der Außenseite eine annähernd U-förmige Profiltasche zur formschlüssigen Aufnahme von für vier Knebeltaschen 70 als Rinnenschußverbindungsmittel, die zwischen der Unterseite der Flanschansätze 12, 32, der über seine gesamte Höhe vertikal ausgerichteten Außenwand 29 des Zwischenflansches 11, 31 und der Deckseite der Flanschschenkel 13, 33 eingelegt und eingeschweißt werden können; die U-förmigen Profiltaschen beider Seitenwangen 10, 30 haben die gleichen Abmessungen. Die geschmiedeten Knebeltaschen 70 sind derart am Rinnenschuß 50 angeordnet, daß an einem Rinnenschußende, in Fig. 1 dem vorderen Rinnenschußende, die beiden Knebeltaschen 70 nach außen über das Rinnenschußende, insbesondere nach außen über die gegossenen Seitenwangen 10, 30 hinausragen, während sie am anderen, in Fig. 1 hinteren Rinnenschußende relativ zu den Seitenwangen 10, 30 zurückversetzt liegen, so daß am Rinnenschußstoß eine seitliche Überlappung der Knebeltaschen 70 relativ zu den Seitenwangen 10, 30 und dem Förderboden 84 entsteht. In gleicher Weise überragt auch das Zwischenblech 5A den Förderboden 84 und die Seitenwangen 10, 30, während der Außenrand des hinteren Blechstreifens 5B zurückversetzt angeordnet ist.

Beim Rinnenschuß 50 ist der Wechseltrog 4 derart aufgebaut, daß der aus einem Walzblech bestehende Förderboden 84 zwischen den Vertikalschenkeln 82 der gewalzten Seitenprofile 80 eingeschweißt ist. Hierdurch baut der Wechseltrog 4 vergleichsweise breit, insbesondere wenn die Vertikalschenkel 82 und Horizontalschenkel 81 der Seitenprofile 80 mit einer mehrere Millimeter dicken Verschleißschicht versehen sind, die vor einem Austausch des Wechseltrogs 4 abgenutzt werden kann, ohne die Funktionstüchtigkeit des Rinnenschusses 50 einzuschränken. Die Innenseite 88 der Seitenprofile ist mit ihrer Kontur an die Profilform der Kratzer der Kratzerkette angepaßt. Aufgrund des Konstruktionsprinzips des Wechseltrogs 4 mit zwischen den Vertikalschenkeln 82 angeschweißtem Förderboden 84 stützt sich der Fuß 85 beider Vertikalschenkel 82 unmittelbar auf den Zwischenblechen 5A bzw. 5B ab. Zwischen dem unteren Schenkelabschnitt 16, 36 und dem oberen Schenkelabschnitt 17, 37 der Seitenwangen 10, 30 ist daher nur eine einzige Stufe 15, 35 ausgebildet, die eine vergleichsweise große Auflagefläche für die Randstreifen der Blechstreifen 5A, 5B bildet. Die rinnenschußendseitigen Ränder des Förderbodens 34 sind gewölbt ausgebildet, wobei der eine Rand komplementär zum anderen Rand ausgebildet ist, so daß bei einem aus mehreren Rinnenschüssen 50 zusammengesetzten Streb- oder Streckenförderer die Kratzer vergleichsweise geräuschlos die Stoßstellen zwischen zwei Rinnenschüssen 50 überlaufen können.

Fig. 3 zeigt ein zweites Ausführungsbeispiel für einen Rinnenschuß 150 mit einer Rahmenkonstruktion 101, die zwei identisch zueinander ausgebildete Seitenwangen 110 umfaßt, die wiederum über zwei Blechstreifen, von denen nur der Blechstreifen 105B dargestellt ist, an ihrer Innenwand miteinander verschweißt sind. Wie beim ersten Ausführungsbeispiel umfassen die gegossenen Seitenwangen 110 einen Zwischenflansch 111, einen oberen Flanschansatz 112 und einen unteren Flanschschenkel 113, wobei der Flanschschenkel 111 oberhalb einer Profilverstärkung 149 im unteren Schenkelabschnitt 116 eine angegossene Doppelstufe mit einer unteren Stufe 115 und einer oberen Stufe 160 aufweist; die Stufen 115, 160 werden von dem kräftigen und in der Wandstärke mehr als doppelt so dick wie der obere Schenkelabschnitt 117 ausgeführten unteren Schenkelabschnitt 116 unterstützt. An der unteren Stufe 115 ist jeweils das Zwischenblech 105 angeschweißt, während sich auf der oberen Stufe 160 der Förderboden 184 des Wechseltrogs 104 abstützt. Unmittelbar oberhalb der Stufe 160 hat der Zwischenflansch 111 seine geringste Wandstärke und ist dort mit einer Kehle 161 versehen. Am unteren Schenkelabschnitt 116 ist jeweils ein Fußflansch 120 angegossen und der Fußflansch 120 und der untere Schenkelabschnitt 116 sind an ihrer Innenseite 128 mit einer bogenförmigen und an die Enden der Kratzer angepaßten Profilkontur versehen, so daß Kratzer im Untertrum 102 seitlich unmittelbar an den Seitenwangen 110 geführt werden. An der Unterseite des Fußflansches 120 ist jeweils eine Längsausnehmung 162 angegossen, an der das den Untertrum 102 nach unten abschließende Bodenblech 107, jeweils den Fußflansch 120 untergreifend, angeschweißt werden kann. Auch bei den Seitenwangen 110 des Rinnenschusses 150 können gewichtsreduzierende Einziehungen beim Gießen vorgesehen werden. Da beide Seitenwangen 110 vorzugsweise identisch zueinander ausgebildet sind, weisen beide Flanschschenkel 113 einen vergleichsweise kurzen Flanschschenkelfortsatz 125 auf, der den Flanschansatz 112 nur geringfügig nach außen überragt. Die Stirnkante 163 des Flanschschenkelfortsatzes 125 ist jeweils als Winkelfläche ausgeführt, um an ihnen Anbauteile wie eine Walzenfahrbahn oder eine Unterstützungsleiste 194 für eine an einer der Seitenwangen 10 angeschweißte Anschlußkonsole 192 anschweißen zu können. Beim Wechseltrog 104 ist das Fußende 185 der Vertikalschenkel 182 der Seitenprofile 180 an der Oberseite des Förderbodens 184 angeschweißt. Die Seitenprofile 180 sind insgesamt annähernd T-förmig und der Horizontalschenkel 181 weist jeweils einen den Vertikalschenkel 182 nach außen überragenden Horizontalsteg 183 auf, dessen Außenstirnkante 186 über eine durchgehende Längsschweißnaht 126 als Arretiermittel für den Wechseltrog 104 mit der Oberseite der Flanschansätze 112 der Seitenwange 110 verbunden wird. Auch hier sind alle Längsschweißnähte zum Verbinden der Blechstreifen 105B mit den Seitenwangen 110 sowie der Seitenpropfile 180 des Wechseltrogs 104 mit den Flanschansätzen 112 von oben gut zugänglich und können mittels eines Schweißroboters ausgeführt werden. In den U-förmigen Profiltaschen an der Außenwand der Seitenwangen 110 sind wiederum vorzugsweise geschmiedete Knebeltaschen 170 formschlüssig eingesetzt und mit wenigen Schweißnähten, die ebenfalls mit einem Schweißroboter vorgenommen werden können, verschweißt.

Beim dritten Ausführungsbeispiel eines in Fig. 4 gezeigten Rinnenschusses 250 sind wiederum zwei identisch ausgebildete und aus Gußteilen bestehende Seitenwangen 210 über die Blechstreifen 205B eines Zwischenblechs miteinander verbunden, das sich in einer Stufe 215 am Zwischenflansch 211 der Seitenwangen 210 abstützt. Der obere Schenkelabschnitt 217 und der obere Flanschansatz 212 sind identisch wie beim Ausführungsbeispiel nach Fig. 2 ausgebildet. Die Innenwand des oberen, zusammen mit dem Zwischenblech den Aufnahmeraum für den Wechseltrog 204 begrenzenden Schenkelabschnitts 217 weist eine Nase 223 auf, die eine seitliche Fixierung für den den Obertrum 203 umfassenden Wechseltrog 204 bildet. Der Förderboden 284 des Wechseltrogs 204 stützt sich auf einer oberen Stufe 260 an der Innenwand 214 des Zwischenflansches 211 ab. Im Unterschied zum Ausführungsbeispiel nach Fig. 3 verläuft die Außenwand 229 des Zwischenflansches 211 nicht geradlinig und vertikal, sondern der untere Schenkelabschnitt 216 verjüngt sich durch eine auf Höhe der unteren Stufe 215 beginnende und nach innen gerichtete Schräge 252, durch die unterhalb der Profilverstärkung 249 am unteren Schenkelabschnitt 216 eine Einbuchtung 251 entsteht. Durch die Einbuchtung 251 wird das Gewicht der beiden Seitenwangen 210 reduziert. Um gleichwohl hohe Belastungen in Vertikalrichtung aufnehmen zu können, weisen die geschmiedeten und zwischen dem Flanschansatz 212 und dem unteren Flanschschenkel 213 rinnenschußendseitig eingeschweißten Knebeltaschen 270 jeweils eine Ausbuchtung 271 auf, die an die Profilform der Einbuchtung 251 angepaßt ist und diese formschlüssig ausfüllt.

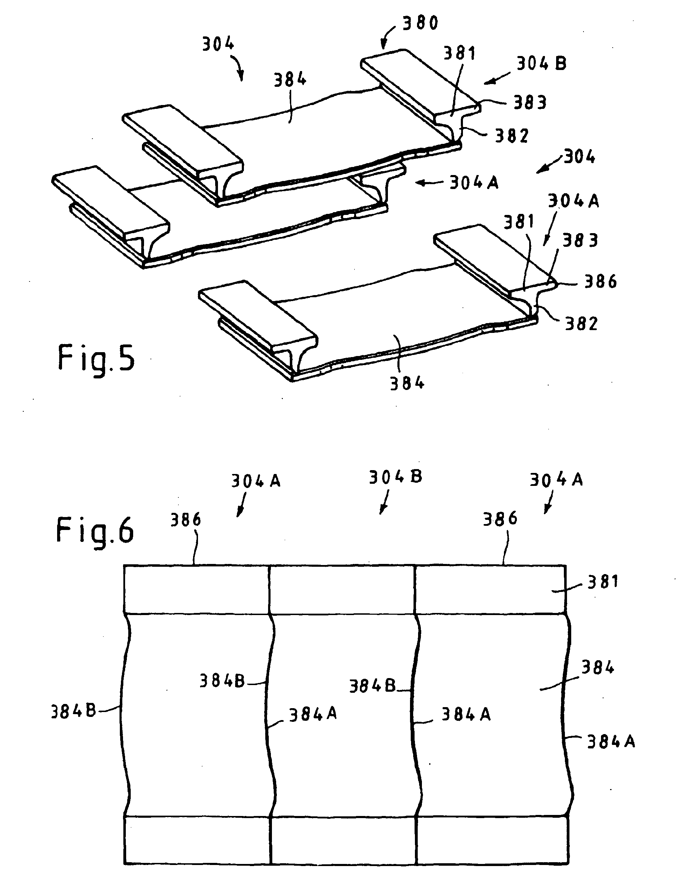

Die zwischen den Blechstreifen 5A, 5B (Fig. 1) ausgebildete Inspektionsöffnung 6 bietet insbesondere Vorteile im Zusammenhang mit einem Inspektionstrog 304 als Wechseltrog, wie er in den Fig. 5 und 6 dargestellt ist. Der Inspektionstrog 304 besteht aus drei identisch zueinander ausgeführten Trogabschnitten 304A, 304B mit jeweils einem Förderbodenabschnitt 384 und zwei hier im wesentlichen T-förmigen Seitenprofilabschnitten 380 mit Vertikalschenkel 382 und Horizontalschenkel 381, der einen nach außen den Vertikalschenkel 382 überragenden Horizontalsteg 383 aufweist. Das Profil der Seitenprofilabschnitte 380 ist an das Profil der Seitenprofile der Rinnenschüsse nach den Fig. 1 bis 4, mithin das Profil der "normalen" Wechseltröge, angepaßt. Beim Inspektionstrog 304 werden die Außenstirnflächen 386 der Horizontalstege 383 der Horizontalschenkel 381 beider äußeren Trogabschnitte 304A über Längsschweißnähte mit der Oberseite der Flanschansätze der gegossenen Seitenprofile der Rinnenschüsse verschweißt, wobei sich die Länge der Längsschweißnähte jeweils über die Länge des zugehörigen Trogabschnitts 304A erstreckt. Der mittlere Trogabschnitt 304B hingegen wird mittels lösbarer, nicht gezeigter Trogbefestigungsmittel an den beiden anderen Trogabschnitten 304A und/oder an den Seitenwangen der Rinnenschüsse arretiert, so daß er für eine Inspektion der Kratzerkette im Untertrum auch kurzfristig demontiert werden kann, um den Untertrum durch die in Fig. 1 angedeutete Öffnung zwischen den Blechstreifen 5A, 5B hindurch erreichen zu können. Wie Fig. 6 gut entnommen werden kann, sind die Förderbodenabschnitte 384 aller Trogabschnitte 304A, 304B mit gewölbten Rändern 384A, 384B versehen, wobei das Wölbungsprofil des einen Randes 384A komplementär zu dem des anderen Randes 384B ausgebildete ist, so daß die im Obertrum umlaufenden Kratzer einer Kratzerkette ruhig und ohne Sprungstellen die Stoßstellen zwischen den Trogabschnitten und die Stoßstelle zum nachfolgenden Wechseltrog überlaufen können.

Für den Fachmann ergeben sich aus der vorhergehenden Beschreibung eine Reihe von Modifikationen, die in den Schutzbereich der anhängenden Ansprüche fallen sollen. Es versteht sich, daß der in den Fig. 2 und 3 gezeigte Wechseltrog auch bei einem Rinnenschuß mit unterschiedlich ausgebildeten Seitenwangen entsprechend Fig. 1 verwendet werden kann. Die in den Ausführungsbeispielen T-förmig dargestellten Seitenprofile könnten auch L-förmig oder winkelförmig sein, wobei dann ggf. die Höhe der Seitenprofile bündig mit der Oberseite der Flanschansätze abschließt und/oder die Schweißnaht am Spalt zwischen dem Zwischenflansch und dem Vertikalschenkel der Seitenprofile angebracht wird. In den gegossenen Seitenwangen können weitere gewichtsreduzierende Einziehungen vorgesehen werden. Nicht dargestellt ist ferner, daß als Rinnenschußverbindungsmittel dienende Knebeltaschen oder Rückhalteteile für Knebelköpfe von Rinnenschußverbindungsknebeln integral an den aus Gußteilen bestehenden Seitenwangen angegossen sein können und daß bei der abbaustoßseitigen Seitenwange der obere Flanschansatz ausschließlich im Bereich der angegossenen oder angeschweißten Knebeltaschen oder des angegossenen Rückhalteteils ausgebildet sein kann. In bevorzugter erfindungsgemäßer Ausführungsform haben allerdings die gegossenen Seitenwangen zumindest im Zwischenschenkel, Flanschschenkel und Flanschansatz einen sich im wesentlichen konstant über die Rinnenschußlänge erstreckenden Querschnitt.

## Patentansprüche

1. Rinnenschuß (50) für untertägige Streb- und Streckenförderer, mit aus Gußteilen bestehenden, unsymmetrischen, an einem Zwischenflansch (11, 31; 111; 211) über ein angeschweißtes Blech (5A, 5B; 105B) miteinander verbundenen Seitenwangen (10, 30; 110, 210), die nach außen vom Zwischenflansch rückspringend einen oberen angegossenen Flanschansatz (12, 32; 112; 212) und einen unteren angegossenen Flanschschenkel (13, 33; 113; 213) sowie nach innen vorspringend einen den Untertrum (2; 102) teilweise seitlich begrenzenden angegossenen Fußflansch (20, 40; 120) umfassen, an dem ein den Untertrum zur Führung der Kratzer einer Kratzerkette nach unten abschließendes Bodenblech (7; 107) angeschweißt ist, **dadurch gekennzeichnet, daß** das Gußteil an der Innenwand des Zwischenflansches (11, 31; 111; 211), im wesentlichen auf halber Höhe zwischen Flanschschenkel (13, 33; 113; 213) und Flanschansatz (12, 32; 112; 212), wenigstens eine Stufe (15; 115, 215) zur Abstützung und Anschweißung des ein Zwischenblech bildenden Bleches (5A, 5B; 105B) aufweist, unterhalb der der Zwischenschenkel (11, 31; 111; 211) und der Fußflansch (20, 120) eine Profilverstärkung (49; 149;249) bilden, und oberhalb der der Zwischenschenkel (11, 31; 111; 211) einen Aufnahmeraum zur Aufnahme eines gewalzte, mit einem Förderboden (84; 184; 284) verschweißte Seitenprofile (80; 180) aufweisenden Obertrums (3; 103; 203) seitlich begrenzt.

2. Rinnenschuß nach Anspruch 1, **dadurch gekennzeichnet, daß** der Zwischenschenkel (111; 211) an der Innenwand eine zweite Stufe (160; 260) zur Abstützung des Förderbodens (184; 284) aufweist, die oberhalb der ersten Stufe (115; 215) zur Abstützung des Zwischenblechs ausgebildet ist.

3. Rinnenschuß nach Anspruch 1 oder 2, **dadurch gekennzeichnet, daß** der Zwischenschenkel einen Schenkelabschnitt (17, 37; 117; 217) oberhalb der Stufe/n ( 15;35; 115, 235) und einen Schenkelabschnitt (16, 36; 116, 216) unterhalb der Stufe/n aufweist, wobei die Wandstärke des oberen Schenkelabschnitts mehr als 30%, vorzugsweise mehr als 50 % kleiner ist als die Wandstärke des unteren Schenkelabschnitts im Bereich der Profilverstärkung.

4. Rinnenschuß nach einem der Ansprüche 1 bis 3, **dadurch gekennzeichnet, daß** der Obertrum ein Wechseltrog (4; 104; 204) ist, dessen Seitenprofile (80; 180; 280) und/oder Förderboden (84; 184, 284) in ihrer Wandstärke vorzugsweise mit einer Verschleiß- oder Abnutzungsschicht versehen sind, wobei vorzugsweise die Seitenprofile des Wechseltrogs (4; 104; 204) im wesentlichen L-förmig oder T-förmig sind und eine an die Profilform der Kratzer angepaßte Innenseite (88; 188) aufweisen.

5. Rinnenschuß nach Anspruch 4, **dadurch gekennzeichnet, daß** der Förderboden (184) seitlich über Vertikalschenkel (182) der Seitenprofile (180) des Wechseltrogs (104) bzw. deren Innenseiten (188) hinausragt und sich im Montagezustand an der zweiten Stufe (160) abstützt.

6. Rinnenschuß nach Anspruch 4, **dadurch gekennzeichnet, daß** der Förderboden (84) zwischen Vertikalschenkeln (82) der Seitenprofile (80) des Wechseltrogs (4) eingeschweißt ist, die sich vorzugsweise mit dem Fuß (85) ihres Vertikalschenkels (82) auf dem Zwischenblech (5A, 5B) abstützen.

7. Rinnenschuß nach einem der Ansprüche 1 bis 6, **dadurch gekennzeichnet, daß** an der Innenwand (14; 114; 214) des oberen Schenkelabschnitts (17, 37; 117, 217) auf Höhe des Flanschansatzes (12, 32; 112; 212) eine angegossene Nase (23, 43; 223) ausgebildet ist, und/oder daß der Flanschschenkel (13, 33; 113; 213) den Flanschansatz (12, 32; 112; 212) nach außen überragt und den Auflagefuß auf dem Liegenden bildet.

8. Rinnenschuß nach einem der Ansprüche 1 bis 7, **dadurch gekennzeichnet, daß** der untere Schenkelabschnitt (216) an der Außenwand (229) unterhalb der Stufe/n (215, 260) mit einer Schräge (252) von vorzugsweise etwa 60° versehen ist und die Schräge (252), der untere Schenkelabschnitt (216) und die Deckwand des Flanschschenkels (213) eine Einbuchtung (251) zur formschlüssigen Abstützung und Aufnahme entsprechender Ausbuchtungen (271) an den Rinnenschußverbindungsmitteln (270) und/oder an einer Anschlußkonsole für den Schreitbalken bilden und begrenzen.

9. Rinnenschuß nach einem der Ansprüche 1 bis 8, **gekennzeichnet durch** gewichtsreduzierende, vorzugsweise mit angegossenen Stegrippen (19, 39) ausgesteifte Einziehungen (18, 38; 22; 27) in der Außenwand des unteren Schenkelabschnitts (16, 36), der Unterseite des Flanschschenkels (13, 25) und/oder der Bodenwand des Fußflansches (20).

10. Rinnenschuß nach einem der Ansprüche 1 bis 9, **gekennzeichnet durch** voneinander abweichend ausgebildeten Seitenwangen (10, 30), wobei an der einen, beim Strebförderer versatzseitigen Seitenwange (30) eine Anschlußkonsole (192) für einen Schreitbalken angegossen ist und/oder an der anderen, beim Strebförderer abbaustoßseitigen Seitenwange (10) wenigstens zwei Stützrippen (24) angegossen sind, wobei vorzugsweise an der versatzseitigen Seitenwange vertikal sich erstreckende Stützstege (91) zum Unterstützen einer versatzseitigen Maschinenfahrbahn oder Winkelleiste (90) od.dgl. angegossen sind.

11. Rinnenschuß nach Anspruch 10, **dadurch gekennzeichnet, daß** die angegossene oder angeschweißte Anschlußkonsole und/oder die angegossenen Stützrippen den Flanschansatz gegenüber dem Flanschschenkel versteifen.

12. Rinnenschuß nach einem der Ansprüche 1 bis 11, **dadurch gekennzeichnet, daß** unter dem Fußflansch (120) eine Längsausnehmung (162) angegossen ist, an der das Bodenblech (107), den Fußflansch (120) untergreifend, angeschweißt ist oder daß der Fußflansch (20, 40) jeweils eine senkrechte, annähernd bis zum Liegenden heranreichende Stirnfläche (21, 41) aufweist, wobei zwischen den Stirnflächen (21, 41) der Fußflansche (20, 40) beider Seitenwangen (10, 30) das Bodenblech (7) angeschweißt ist.

13. Rinnenschuß nach einem der Ansprüche 1 bis 12, **dadurch gekennzeichnet, daß** der untere Schenkelabschnitt (16, 36; 116) an der Innenwand (28, 48; 128), ausgehend von der Profilverstärkung (49; 149) über eine bogenförmige Profilkontur in den Fußflansch (20, 40; 120) übergeht.

14. Rinnenschuß nach einem der Ansprüche 1 bis 13, **dadurch gekennzeichnet, daß** zwei parallel nebeneinander angeordnete und eine Öffnung (6) zwischen sich freilassende Blechstreifen (5A, 5B) das Zwischenblech bilden.

15. Rinnenschuß nach einem der Ansprüche 4 bis 14, **dadurch gekennzeichnet, daß** der Wechseltrog (4; 104; 204) an den im wesentlichen T-förmigen Seitenprofilen (80; 180) einen Horizontalsteg (83, 183) aufweist, der mit dem Flanschansatz (12, 32; 112) der Seitenwange (10, 30; 110) über vorzugsweise eine einzige durchgehende Längsschweißnaht (26, 46; 126) als Arretiermittel für den Wechseltrog (4; 104, 204) verschweißt ist.

16. Rinnenschuß nach einem der Ansprüche 1 bis 14, **dadurch gekennzeichnet, daß** der Wechseltrog L-förmige Seitenprofile mit Vertikalschenkel und Horizontalschenkel aufweist und über vorzugsweise eine einzige durchgehende Längsschweißnaht als Arretiermittel für den Wechseltrog am Spalt zwischen Seitenprofil und Seitenwange verschweißt ist, wobei vorzugsweise im Montagezustand die Horizontalschenkel jeweils bündig mit den zugehörigen Flanschansätzen der Seitenwangen abschließen.

17. Rinnenschuß nach Anspruch 15 oder 16, **dadurch gekennzeichnet, daß** zur Demontage des Wechseltrogs die Längsschweißnähte vorzugsweise maschinell aufgetrennt werden.

18. Rinnenschuß nach einem der Ansprüche 1 bis 17, **dadurch gekennzeichnet, daß** die das Zwischenblech bildenden Blechstreifen und/oder der Förderboden rinnenschußendseitig mit durch Brennschneiden hergestellten, bogenförmigen Rändern versehen sind, wobei das Wölbungsprofil des einen Randes komplementär zu dem des anderen Randes ausgebildet ist.

19. Rinnenschuß nach einem der Ansprüche 1 bis 16, **dadurch gekennzeichnet, daß** der Wechseltrog als Inspektionstrog (304) ausgebildet ist und vorzugsweise aus drei identisch zueinander ausgeführten Trogabschnitten (304A, 304B) mit jeweils einem Förderbodenabschnitt (384) und zwei im wesentlichen L-förmigen oder T-förmigen Seitenprofilabschnitten (380) mit Vertikalschenkel (382) und Horizontalschenkel (381) besteht, wobei vorzugsweise bei den beiden äußeren Trogabschnitten (304A) die Horizontalschenkel mit den Innenwänden der Seitenwangen bzw. den Nasen an den Seitenwangen oder die Außenstirnkanten eines nach außen vorspringenden Horizontalstegs (383) am Horizontalschenkel (381) mit der Oberseite der Flanschansätze über Längsschweißnähte verschweißt sind und der mittlere Trogabschnitt (304B) mittels lösbarer Trogbefestigungsmittel an den beiden anderen Trogabschnitten (304A) und/oder an den die Seitenwangen bildenden Gußteilen arretiert ist.

20. Rinnenschuß nach Anspruch 19, **dadurch gekennzeichnet, daß** die Förderbodenabschnitte (384) aller Trogabschnitte (304A, 304B) trogendseitig mit vorzugsweise durch Brennschneiden hergestellten gewölbten Rändern (384A, 384B) versehen sind, wobei das Wölbungsprofil des einen Randes (384A) komplementär zu dem des anderen Randes (384B) ausgebildet ist.

21. Rinnenschuß nach einem der Ansprüche 14 bis 20, **dadurch gekennzeichnet, daß** einer der Blechstreifen (5A) am Rinnenschußende über beide Seitenwangen (10, 30) hinausragt und der andere Blechstreifen (5B) gegenüber dem Rinnenschußende zurückversetzt angeordnet ist.

22. Rinnenschuß nach einem der Ansprüche 1 bis 21, **dadurch gekennzeichnet, daß** als Rinnenschußverbindungsmittel insbesondere geschmiedete, die Köpfe von Knebeln aufnehmende Knebeltaschen vorgesehen sind, wobei vorzugsweise die Knebeltaschen (70) an einem Rinnenschußende über die Seitenwangen (10, 30) hinausragend und am anderen Rinnenschußende zurückversetzt an den die Seitenwangen bildenden Gußteilen (10, 30) angeschweißt sind.

23. Rinnenschuß nach einem der Ansprüche 1 bis 21, **dadurch gekennzeichnet, daß** als Rinnenschußverbindungsmittel dienende Knebeltaschen oder Rückhalteteile für Knebelköpfe von Rinnenschußverbindungsknebeln integral an den aus Gußteilen bestehenden Seitenwangen angegossen sind.

24. Rinnenschuß nach einem der Ansprüche 1 bis 23, **dadurch gekennzeichnet, daß** bei der abbaustoßseitigen Seitenwange der obere Flanschansatz ausschließlich im Bereich der Knebeltaschen oder des angegossenen Rückhalteteils ausgebildet ist und/oder daß diese Seitenwange mittels angegossener Rippen verstärkt ist.

## Claims

1. A conveyor pan (50) for underground face and gate conveyors, with asymmetrical side walls (10, 30; 110; 210), consisting of cast parts and joined together by a plate (5A, 5B; 105) welded onto intermediate flanges (11, 31; 111; 211) which comprise an upper cast flange lug (12, 21; 112; 212) extending back towards the outside from the intermediate flange and a lower cast flange arm (12, 32; 112; 212) and a cast foot flange (13, 33; 113; 213) extending inwards partly bordering a bottom run (2; 102) for the guidance of a scraper of a scraper chain, onto which a bottom plate (7; 107) is welded which closes the bottom run to below, **characterized in that** the cast part has at least one Step (15; 115, 215) on an inner wall of the intermediate flange (11, 31; 111; 211), essentially at half the height between the flange arm (13, 33; 113; 213) and the flange lug (12, 32; 112; 212) for the support and welding on of a metal sheet forming an intermediate plate (5A, 5B; 105B), beneath which an intermediate arm (11, 31; 111; 211) and the foot flange (20, 120) form a strengthening of a profile (49; 149; 249) and above which the intermediate arm (11, 31; 11; 211) borders to its side an accepting space for the acceptance of a top run having a rolled side profile (80; 180) welded to a conveyor base (84; 184; 284).

2. A conveyor pan according to Claim 1, **characterized in that** the intermediate arm (111; 211) has a second step (160; 260) on its inner wall for the support of the conveyor base (184; 284), which is formed above the first step 115; 215) for the support of the intermediate plane.

3. A conveyor pan according to Claim 1 or Claim 2, **characterized in that** the intermediate arm has an arm section (17, 37; 117; 217) above the step(s) (15; 35; 115, 235) and an arm section (16, 36; 116, 216) below the step(s) whereby the thickness of a wall of the upper intermediate arm section is more than 30%, and preferably more than 50% smaller than the wall thickness of the lower intermediate arm section in the range of the strengthening of the profile.

4. A conveyor pan according to any of claims 1 to 3, **characterized in that** the top run is an exchangeable tray (4; 104; 204) whose side profiles (80; 180; 280) and/or conveyor base (84; 184, 284) are preferably provided in the thickness of their wall with a wearing or consumable layer, wherein preferably the side profiles of the exchangeable tray (4; 104; 204) are essentially L-shaped or T-shaped and have an inner side (88; 188) matched to the profile shape of the scraper.

5. A conveyor pan according to Claim 4, **characterized in that** the conveyor base (184) extends laterally out beyond vertical arms (182) of the side profiles (180) of the exchangeable tray (104) and their inner sides (188) and is supported on the second step (160).

6. A conveyor pan according to Claim 4, **characterized in that** the conveyor base (84) is welded in between vertical arms (82) of the side profiles (80) of the exchangeable tray (4), which is preferably supported by feet (85) of their vertical arms (82) on the intermediate plate (5A, 5B).

7. A conveyor pan according to any of Claims 1 to 6, **characterized in that** a cast in nose (23, 43; 223) is formed on an inner wall (14; 114; 214) of the upper intermediate arm (17, 37; 117,217) section at the height of the flange lug (12, 32; 112; 212) and/or that the flange arm (13, 3; 113; 213) extends out wards beyond the flange lug (12, 32; 112; 212) and forms an abutment foot onto the ground.

8. A conveyor pan according to any of Claims 1 to 7, **characterized in that** the lower intermediate arm section (216) is provided with a chamfer (252) of preferably about 60% on its outer wall (229) below the step(s) (215, 260) and the chamfer (252), the lower intermediate arm section (216) and a top wall of.the flange arm (213) form and border a cut-out (251) for the positive support and acceptance of corresponding protrusions (271) on a means for joining conveyor pans (270) and/or a connecting bracket for the advancing beam.

9. A conveyor pan according to any of Claims 1 to 8, **characterized in that** weight reducing depressions (18, 38; 22; 27), preferably stiffened by cast web ribs (19, 39) are provided in an outer wall of the lower intermediate arm section (16, 36), an underside of the flange arm (13, 25) and/or in a base wall of the foot flange (20).

10. A conveyor pan according to of Claims 1 to 9, **characterized in that** side walls (10, 30) are constructed differently from each other, whereby on one side wall (30) on a goaf-side a connecting bracket (192) for an advancing beam is cast in and/or on another side wall (10) on a face side at least two supporting ribs (24) are cast, whereby preferebly vertically extending support webs (91) are cast on the side wall on the goaf-side for support of a goaf-side machine track or angle plate (90), or similar.

11. A conveyor pan according to Claim 10, **characterized in that** the cast or welded on connecting bracket and/or cast on supporting ribs stiffen the flange lug opposite the flange arm.

12. A conveyor pan according to Claims 1 to 11, **characterized in that** a longitudinal cut out (162) is cast below the foot flange (120), onto which a base plate (107), engaging the foot flange (120) from underneath, is welded on, or that the foot flange (20, 40) has a vertical front surface (21, 41) reaching almost to the ground, whereby the base plate (7) is welded between the front surfaces (21, 41) of the foot flanges (20, 40) of both side walls (10, 30).

13. A conveyor pan according to Claims 1 to 12, **characterized in that** the lower intermediate arm section (16, 36; 116) makes a transition from a profile thickening (49; 149) via a curve shaped profile contour on its inner wall 28, 48; 128) into the foot flange (20, 40; 120).

14. A conveyor pan according to Claims 1 to 13, **characterized in that** two metal Strips (5A, 5B) arranged parallel to each other leaving an opening (6) between themselves form the intermediate plate.

15. A conveyor pan according to Claims 4 to 14**, characterized in that** the exchangeable tray (4; 104; 204) has essentially T-shaped side profiles (80; 180) which include a horizontal webs (83, 183) which are welded to the flange lugs (12, 32; 112) of the side walls (10, 30; 110), using preferably a single continuous long welded seam (26, 46; 126), as a retaining means for the exchangeable tray 4; 104, 204).

16. A conveyor pan according to any one of Claims 1 to 14, **characterized in that** the exchangeable tray has L-shaped side profiles each with a vertical web and a horizontal web where the exchangeable tray is welded preferably using a single continuous long welded seam, as a retaining means for the exchangeable tray in a gap between the side profile and the side wall, whereby preferably the horizontal webs end in a binding manner with associated flange lugs of the side walls.

17. A conveyor pan according to Claim 15 or Claim 16, **characterized in that** for the disassembly of the exchangeable tray the long welded joint is separated preferably by machine.

18. A conveyor pan according to any of Claims 1 to 17, **characterized in that** the metal Strips forming the intermediate plate and/or the conveyor base are provided with curve shaped edges produced by flame cutting, whereby the profile of the curve of one edge is complementary to that of the other edge.

19. A conveyor pan according to any one of Claims 1 to 16, **characterized in that** the exchangeable tray is configured as an inspection tray (304) and preferably comprises three identically constructed tray sections (304A, 304B) each having a conveyor base section (384) and two essentially L-shaped or T-shaped side profile sections (380) with vertical arms (382) and horizontal arms (381), whereby preferably in the two outer tray sections (304A) the horizontal arms are welded using a long welded seam to the inner walls of the side walls ot to the noses on the side walls, or to the outer edges of a horizontal web (383) on the horizontal arm (381) with an upper side of the flange lug and the centre tray section (304B) is retained by using removable tray fastening means onto the two other tray sections (304A) and to the cast parts forming the side walls.

20. A conveyor pan according to Claim 19, **characterized in that** the conveyor base sections (384) of all the tray sections (304A, 304B) are provided with curved edges (384A, 384B) preferably produced by flame cutting whereby a curve profile of one edge (384A) is formed complementary to that of another edge (384B).

21. A conveyor pan according to any one of Claims 14 to 20, **characterized in that** one of the metal strips (5A) on the end of the conveyor pan extends out over both side walls (10, 30) and the other strip (5B) is arranged set back from the end of the conveyor pan.

22. A conveyor pan according to any of Claims 1 to 21, **characterized in that** the conveyor pan joining means comprises preferably forged toggle pockets welded onto the side walls in which the toggle heads of toggle bolts can be inserted, whereby preferably the toggle pockets (70) extend our over the side walls (10, 30) at one end of the conveyor pan and at the other end of the conveyor pan are set back.

23. A conveyor pan according to any one of Claims 1 to 21, **characterized in that** the toggle pockets, serving as conveyor pan joining means, or holding means for toggle heads are cast integrally into the side walls being formed by cast parts.

24. A conveyor pan according to any of Claims 1 to 23, **characterized in that** in a face side side-wall of a face conveyor the upper flange lug is formed exclusively in the region of the welded on toggle pockets or the casted-in holding means and/or that this side wall is strengthened by means of cast in ribs.

## Revendications

1. Section de canal (50) pour des bandes transporteuses souterraines de taille et de galerie, comprenant des parois latérales (10, 30 ; 110 ; 210) constituées de pièces en fonte coulée, asymétriques, reliées entre elles sur une bride intermédiaire (11, 31 ; 111 ; 211) par l'intermédiaire d'une tôle soudée (5A ; 5B ; 105B) et qui comportent une saillie de bride supérieure (12, 32 ; 112 ; 212) assemblée suite à une fusion et s'étendant en retour vers l'extérieur depuis la bride intermédiaire ainsi qu'un segment de bride inférieur (13, 33 ; 113 ; 213) assemblé suite à une fusion ainsi qu'une bride de pied (20 ; 40 ; 120) assemblée suite à une fusion, faisant saillie vers l'intérieur et limitant latéralement en partie le compartiment inférieur (2 ; 102), et sur laquelle est soudée une tôle de fond (7 ; 107) qui termine vers le bas le compartiment inférieur pour guider les raclettes d'une chaîne à raclettes, **caractérisée en ce que** la pièce en fonte coulée présente sur la paroi intérieure de la bride intermédiaire (11, 31 ; 111 ; 211), sensiblement à la mi-hauteur entre le segment de bride (13, 33 ; 113 ; 213) et la saillie de bride (12, 32 ; 112 ; 212) au moins une découpure (15 ; 115 ; 215) pour le soutien et le soudage de la tôle (5A, 5B ; 105B) formant une tôle intermédiaire, découpure en dessous de laquelle la bride intermédiaire (11, 31 ; 111 ; 211) et la bride de pied (20 ; 120) forment un renforcement de profilé (49 ; 149 ; 249) et au-dessus de laquelle la bride intermédiaire (11, 31 ; 111 ; 211) limite latéralement un compartiment supérieur (3 ; 103 ; 203) qui présente un espace de réception pour réceptionner un profilé latéral (80 ; 180) laminé et soudé à un fond de convoyeur (84 ; 184 ; 284).

2. Section de canal selon la revendication 1, **caractérisée en ce que** la bride intermédiaire (111 ; 211) présente sur la paroi intérieure une seconde découpure (160 ; 260) pour le soutien du fond de convoyeur (184 ; 284), laquelle est réalisée au-dessus de la première découpure (115 ; 215) pour le soutien de la tôle intermédiaire.

3. Section de canal selon l'une ou l'autre des revendications 1 et 2, **caractérisée en ce que** la bride intermédiaire présente un tronçon de segment (17, 37 ; 117 ; 217) au-dessus de la (des) découpure(s) (15, 35 ; 115 ; 235) et un tronçon de segment (16, 36 ; 116 ; 216) en dessous de la (des) découpure(s), dans laquelle l'épaisseur de paroi du tronçon de segment supérieur est inférieure à l'épaisseur de paroi du tronçon de segment inférieur dans la zone du renforcement de profilé, de plus de 30%, de préférence de plus de 50%.

4. Section de canal selon l'une des revendications 1 à 3, **caractérisée en ce que** le compartiment supérieur est un bac interchangeable (4 ; 104 ; 204) dont les profilés latéraux (80 ; 180 ; 280) et/ou les fonds de convoyeur (84 ; 184 ; 284) sont munis de préférence dans leur épaisseur de paroi d'une couche d'usure ou de frottement, dans laquelle les profilés latéraux du bac interchangeable (4 ; 104 ; 204) sont de préférence sensiblement en forme de « L » ou en forme de « T » et présentent une face intérieure (88 ; 188) adaptée à la forme de profilé des raclettes.

5. Section de canal selon la revendication 4, **caractérisée en ce que** le fond de convoyeur (184) dépasse latéralement au-delà des segments verticaux (182) des profilés latéraux (180) du bac interchangeable (104) ou de ses faces intérieures (188) et s'appuie dans l'état de montage sur la seconde découpure (160).

6. Section de canal selon la revendication 4, **caractérisée en ce que** le fond de convoyeur (84) est soudé entre des segments verticaux (82) des profilés latéraux (80) du bac interchangeable (4), lesquels s'appuient de préférence avec le pied (85) de leur segment vertical (82) sur la tôle intermédiaire (5A ; 5B).

7. Section de canal selon l'une des revendications 1 à 6, **caractérisée en ce qu'un** talon assemblé suite à une fusion (23, 43 ; 223) est réalisé sur la paroi intérieure (14 ; 114 ; 214) du tronçon de segment supérieur (17, 37 ; 117, 217) à la hauteur de la saillie de bride (12, 32 ; 112 ; 212), et/ou **en ce que** le segment de bride (13, 33 ; 113 ; 213) dépasse de la saillie de bride (12, 32 ; 112 ; 212) vers l'extérieur et forme le pied d'appui sur le sol.

8. Section de canal selon l'une des revendications 1 à 7, **caractérisée en ce que** le tronçon de segment inférieur (216) est muni d'un pan oblique (252) de préférence d'environ 60° sur la paroi extérieure (229) en dessous de la (des) découpure(s) (215, 260) et **en ce que** le pan oblique (252), le tronçon de segment inférieur (216) et la paroi de couverture du segment de bride (213) forment et limitent un renfoncement (251) pour le soutien par coopération de formes et la réception des avancées correspondantes (271) sur les moyens de liaison des sections de canal (270) et/ou sur une console de jonction pour la poutre marchante.

9. Section de canal selon l'une des revendications 1 à 8, **caractérisée par** des retraits rigidifiés (18, 38 ; 22 ; 27) réduisant le poids et munis de préférence de nervures à âme pleine (19, 39) assemblées suite à une fusion dans la paroi extérieure du tronçon de segment inférieur (16, 36), dans la face inférieure du segment de bride (13, 25) et/ou dans la paroi de fond de la bride de pied (20).

10. Section de canal selon l'une des revendications 1 à 9, **caractérisée par** des parois latérales réalisées avec divergence l'une par rapport à l'autre (10, 30), dans laquelle une console de jonction (192) est assemblée suite à une fusion du côté du décalage pour une poutre marchante sur la une paroi latérale (30) dans la bande transporteuse souterraine de taille et/ou dans laquelle au moins deux nervures de soutien (24) sont assemblées suite à une fusion sur l'autre paroi latérale (10) du côté du front de taille dans la bande transporteuse souterraine de taille, et dans laquelle des nervures de soutien (91) qui s'étendent à la verticale de préférence sur la paroi latérale du côté du décalage, ou un listeau en équerre (90) ou similaire, est assemblé/sont assemblées suite à une fusion pour soutenir une trajectoire de machine du côté du décalage.

11. Section de canal selon la revendication 10, **caractérisée en ce que** la console de jonction assemblée suite à une fusion ou soudée et/ou les nervures de soutien assemblées suite à une fusion rigidifient la saillie de bride par rapport au segment de bride.

12. Section de canal selon l'une des revendications 1 à 11, **caractérisée en ce qu'un** évidement longitudinal (162) sur lequel est soudée la tôle de fond (107), attaquant la bride de pied (120) par le dessous, est ménagé dans la coulée sous la bride de pied (120) ou **en ce que** la bride de pied (20, 40) présente respectivement une surface frontale verticale (21, 41) qui s'étend approximativement jusque vers le sol, dans laquelle la tôle de fond (7) est soudée entre les surfaces frontales (21, 41) de la bride de pied (20, 40) des deux parois latérales (10, 30).

13. Section de canal selon l'une des revendications 1 à 12, **caractérisée en ce que** le tronçon de segment inférieur (16, 36 ; 116) sur la paroi intérieure (28, 48 ; 128) se transforme en bride de pied (20, 40 ; 120), en partant du renforcement de profilé (49 ; 149) et en passant par un contour de profilé en forme d'arc.

14. Section de canal selon l'une des revendications 1 à 13, **caractérisée en ce que** deux bandes de tôle (5A, 5B) agencées en parallèle l'une à côté de l'autre et laissant une ouverture libre (6) entre elles forment la tôle intermédiaire.

15. Section de canal selon l'une des revendications 4 à 14, **caractérisée en ce que** le bac interchangeable (4 ; 104 ; 204) présente une aile horizontale (83, 183) sur les profilés latéraux (80 ; 180) sensiblement en forme de « T », laquelle est soudée à la saillie de bride (12, 32 ; 112) de la paroi latérale (10, 30 ; 110), de préférence au moyen d'un cordon de soudure longitudinal unique continu (26, 46 ; 126) comme moyen de blocage pour le bac interchangeable (4 ; 104 ; 204).

16. Section de canal selon l'une des revendications 1 à 14, **caractérisée en ce que** le bac interchangeable présente des profilés latéraux en forme de « L » avec des côtés verticaux et des côtés horizontaux et est soudé sur la fente entre le profilé latéral et la paroi latérale de préférence au moyen d'un cordon de soudure longitudinal unique continu comme moyen de blocage pour le bac interchangeable, dans laquelle les côtés horizontaux viennent se terminer respectivement à fleur avec les saillies de bride correspondantes des parois latérales, de préférence dans l'état de montage.

17. Section de canal selon l'une ou l'autre des revendications 15 et 16, **caractérisée en ce que** les cordons de soudure longitudinaux sont ouverts par sectionnement de préférence à la machine.

18. Section de canal selon l'une des revendications 1 à 17, **caractérisée en ce que** les bandes de tôle qui forment la tôle intermédiaire et/ou le fond du convoyeur sont munis, sur le côté de l'extrémité de la section de canal, de bords en forme d'arc fabriqués par oxycoupage, dans laquelle le profilé de voûte d'un des bords est réalisé de manière complémentaire à celui de l'autre bord.

19. Section de canal selon l'une des revendications 1 à 16, **caractérisée en ce que** le bac interchangeable est réalisé comme bac d'inspection (304) et est constitué de préférence de trois tronçons de bac exécutés de manière identique l'un par rapport à l'autre (304A, 304B) et munis respectivement d'un tronçon du fond de convoyeur (384) et deux tronçons de profilé latéral (380) sensiblement en forme de « L » ou en forme de « T » munis de côtés verticaux (382) et de côtés horizontaux (381), dans laquelle les côtés horizontaux sont soudés aux parois intérieures des parois latérales ou aux bordures en saillie sur les parois latérales, de préférence au niveau des deux tronçons de bac extérieurs (304A), ou **en ce que** les arêtes de la face frontale extérieure d'une âme horizontale (383) faisant saillie vers l'extérieur sur le côté horizontal (381) sont soudées à la face supérieure des saillies de bride au moyen de cordons de soudure longitudinaux, et **en ce que** le tronçon de bac médian (304B) est bloqué sur les deux autres tronçons de bac (304A) et/ou sur les pièces en fonte coulée qui forment les parois latérales à l'aide de moyens de fixation de bac détachables.

20. Section de canal selon la revendication 19, **caractérisée en ce que** les tronçons du fond de convoyeur (384) de tous les tronçons de bac (304A, 304B) sont munis sur le côté de l'extrémité du bac de bords voûtés (384A, 384B) fabriqués de préférence par oxycoupage, dans laquelle le profilé de voûte d'un des bords (384A) est réalisé de manière complémentaire à celui de l'autre bord (384B).

21. Section de canal selon l'une des revendications 14 à 20, **caractérisée en ce qu'une** des bandes de tôle (5A) dépasse au-delà des deux parois latérales (10, 30) au niveau de l'extrémité de la section de canal et **en ce que** l'autre bande de tôle (5B) est agencée en retrait à l'opposé de l'extrémité de la section de canal.

22. Section de canal selon l'une des revendications 1 à 21, **caractérisée en ce que** des poches de poignée qui sont en particulier forgées et qui réceptionnent les têtes de poignée sont prévues comme moyens de liaison des sections de canal, dans laquelle les poches de poignée (70) dépassent de préférence au-delà des parois latérales (10, 30) au niveau d'une extrémité de la section de canal et sont soudées en retrait sur les parties en fonte coulée (10, 30) qui forment les parois latérales au niveau de l'autre extrémité de la section de canal.

23. Section de canal selon l'une des revendications 1 à 21**, caractérisée en ce que** des poches de poignée ou des pièces de retenue qui servent de moyens de liaison des sections de canal pour des têtes de poignée des poignées de liaison des sections de canal sont assemblées intégralement suite à une fusion aux parois latérales constituées de parties en fonte coulée.

24. Section de canal selon l'une des revendications 1 à 23, **caractérisée en ce que,** dans la paroi latérale du côté du front de taille, la saillie de bride supérieure est réalisée exclusivement dans la zone des poches de poignée ou de la pièce de retenue assemblée suite à une fusion et/ou **en ce que** cette paroi latérale est renforcée au moyen de nervures assemblées suite à une fusion.
